# EUROPÄISCHE PATENTSCHRIFT

(11) **EP 1 886 127 B1**
(45) Veröffentlichungstag und Bekanntmachung des Hinweises auf die Patenterteilung: **16.05.2012**
(21) Anmeldenummer: 06742312.9
(22) Anmeldetag: 08.05.2006
(51) Int. Cl.: G01N 27/12, G01N 33/00, B60H 3/00, F24F 11/00

(54) **SENSORANORDNUNG, INSBESONDERE ZUR BESTIMMUNG DER LUFTGÜTE**
SENSOR ARRANGEMENT, IN PARTICULAR FOR DETERMINING AIR QUALITY
DISPOSITIF DE DETECTION EN PARTICULIER POUR DETERMINER LA QUALITE DE L'AIR

(30) Priorität: 11.05.2005 DE 102005021614
(43) Veröffentlichungstag der Anmeldung: 13.02.2008
(73) Patentinhaber: Hella KGaA Hueck & Co., 59552 Lippstadt (DE)
(72) Erfinder: NIEMANN, Thomas, 27753 Delmenhorst (DE); HEILENKÖTTER, Carsten, 28844 Weyhe (DE); HESSENKÄMPER, David, 28359 Bremen (DE)
(74) Vertreter: Siekmann, Gunnar
(86) Internationale Anmeldenummer: PCT/DE2006/000788
(87) Internationale Veröffentlichungsnummer: WO 2006/119739

(56) Entgegenhaltungen:
- EP-A- 0 346 127
- EP-A- 0 698 790
- US-A- 5 892 140
- US-A- 6 140 144
- LINDER S ET AL: "Fabrication technology for wafer through-hole interconnections and three-dimensional stacks of chips and wafers" MICRO ELECTRO MECHANICAL SYSTEMS, 1994, MEMS '94, PROCEEDINGS, IEEE WORKSHOP ON OISO, JAPAN 25-28 JAN. 1994, NEW YORK, NY, USA,IEEE, 25. Januar 1994 (1994-01-25), Seiten 349-354, XP010207732 ISBN: 0-7803-1833-1
- GRAF M ET AL: "METAL OXIDE-BASED MONOLITHIC COMPLEMENTARY METAL OXIDE SEMICONDUCTOR GAS SENSOR MICROSYSTEM" ANALYTICAL CHEMISTRY, AMERICAN CHEMICAL SOCIETY. COLUMBUS, US, Bd. 76, Nr. 15, 1. August 2004 (2004-08-01), Seiten 4437-4445, XP001209657 ISSN: 0003-2700

## Beschreibung

Die Erfindung betrifft eine Sensoranordnung mit mindestens einem Gassensor, insbesondere zur Bestimmung der Luftgüte, und einer elektronischen Schaltung zum Betrieb der Sensoranordnung, wobei der Gassensor in einem als Halbleiterbauelement ausgeführten Gassensor realisiert ist, und wobei die elektronische Schaltung als ASIC realisiert und auf einem als Halbleiterbauelement ausgeführten Träger angeordnet ist.

Aus der EP 0 698 790 A1 ist beispielsweise eine Sensoranordnung bekannt, welche ein eine Vielzahl von Sensoren aufweisendes Sensorelement zur Gasfeuchtemessung und eine elektronische Schaltung zum Betrieb der Sensoranordnung umfasst. Die elektronische Schaltung ist insbesondere an einem als Halbleiterelement ausgeführten Träger angeordnet. Das Sensorelement und die elektronische Schaltung aufweisende Träger sind dabei übereinander angeordnet, wobei zwischen dem Gassensorelement und dem Träger ein als Barriereschicht zwischen diesen Elementen ausgebildetes Abstandselement vorgesehen ist.

Aus M. Graf et al., Anal. Chem. 76 (2004) 4437-4445 ist ein monolithisches Gassensor-Mikesystem bekannt. Ein SnO₂-beschichtetes micro-hotplate ist über eine geschlitzte, dielektrische Membrane mit einem einen ASIC aufweisenden Silizium-Träger verbunden.

Des Weiteren sind Sensoranordnungen bekannt, welche aus diskreten Sensor- und Elektronikelementen aufgebaut, so daß die gesamte Sensoranordnung vergleichsweise groß und auch relativ kostenintensiv ist. Insbesondere der Gassensor oder ein Gassensorelement muß für die Messung auf Temperaturen von 200° C bis 450° C geheizt werden. Um diese Temperaturen erreichen zu können, muß der Gassensor sehr gut thermisch isoliert gelagert werden. Dazu werden die betreffenden Gassensoren meist am Plantindrähten freischwebend aufgehangen. Die Fertigung derartiger Verbindungen ist vergleichsweise problematisch. Eine Alternative zu dieser Ausführungsform mit einer besonderen Isolationsschicht ist in der DE 102 21 084 A1 offenbart. Eine weitere Messeinrichtung zur Erfassung von Gasen mit einem Sensor ist in der DE 41 28 186 A1 beschrieben.

Der Erfindung liegt die Aufgabe zugrunde, eine Sensoranordnung der eingangs genannten Art zu schaffen, die baulich besonders klein ausgeführt werden kann.

Die Lösung dieser Aufgabe erfolgt mit einer Sensoranordnung mit den Merkmalen des Patentanspruchs 1. Vorteilhafte Weiterbildungen der Erfindung sind in den Unteransprüchen beschrieben.

Bei einer Sensoranordnung mit mindestens einem Gassensor, insbesondere zur Bestimmung der Luftgüte und einer elektrischen Schaltung zum Betrieb der Sensoranordnung, wobei der Gassensor in einem als Halbleiterbauelement ausgeführten Gassensor realisiert ist, und wobei die elektronische Schaltung als ASIC realisiert und auf einem als Halbleiterbauelement ausgeführten Träger angeordnet ist, ist es erfindungsgemäß vorgesehen, daß das Gassensorelement eine Heizeinrichtung zum Heizen des Gassensors aufweist, und daß zwischen dem Träger mit ASIC und dem Gassensorelement ein als Halbleiterbauelement ausgebildetes Abstandselement angeordnet ist, wobei das Abstandselement mindestens einen Luftspalt aufweist. Mit der Erfindung wird eine baulich sehr kleine Sensoranordnung geschaffen. Durch den konsequenten Einsatz von Technologien der Halbleiter- und Mikrosystemtechnik- (MST) Fertigung ist dieses möglich. Zur thermischen Isolierung bzw. Trennung des ASIC, der nur für Temperaturen bis etwa 125° ausgelegt ist, von dem Gassensor, der mittels der Heizeinrichtung auf Temperaturen von 200° C bis 450° C geheizt werden muß, ist erfindungsgemäß ein Abstandselement zwischen dem ASIC und dem Gassensorelement vorgesehen, welches mindestens einen Luftspalt aufweist.

Bevorzugt weist das Abstandselement säulenartige Stege auf.

Dadurch ist nicht nur ein Luftspalt gegeben, sondern das Abstandselement weist in einem überwiegenden Volumenanteil Luft auf, die einen sehr guten thermischen Isolator darstellt. Bevorzugt besteht das Abstandselement aus einem Bodenbereich und darauf angeordneten Stegen. Dabei sind die säulenartigen Stege im Randbereich, bevorzugt ausschließlich im Randbereich angeordnet. In einer bevorzugten Ausführungsform sind jeweils nur in den Ecken Stege angeordnet. In einer weiteren bevorzugten Ausführungsform sind auch an den Mittenbereichen der Grundfläche Stege angeordnet. Bevorzugt sind also acht Stege zur Verbindung des Gassensorelementes mit dem Träger bzw. dem ASIC vorgesehen. Die Stege sind in einer bevorzugten Ausgestaltung zur elektrischen Kontaktierung des Gassensorelement mit der elektronischen Schaltung ausgelegt. Eine solche Strukturierung läßt sich mit der Mikrosystemtechnik erreichen.

In einer anderen bevorzugten Ausgestaltung ist das Gassensorelement, das Abstandselement und der Träger mit dem darauf angeordneten ASIC als Schichtstapel ausgebildet. Dadurch wird die besonders kompakte Ausführungsform erreicht. Das Gassensorelement ist dabei bevorzugt das oberste der drei Elemente und das Abstandselement ist darunter angeordnet. Das Abstandselement wird auch als Kontaktelement bezeichnet.

In einer anderen bevorzugten Ausgestaltung sind die Außenwände der Sensoranordnung von Außenseiten der Halbleiterbauelemente ausgebildet. Die gesamte Sensoranordnung ist damit gehäuselos ausgebildet. Dadurch wird eine weitere Platzersparnis und eine besonders kostengünstige Ausgestaltung erreicht.

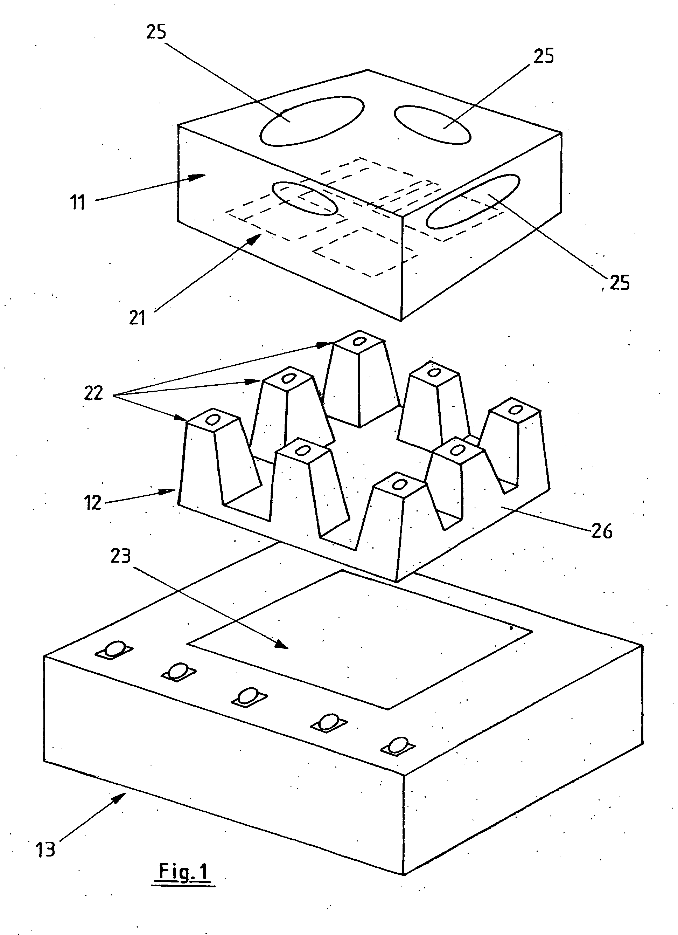

Nachfolgend wird der Erfindung anhand eines in der Zeichnung dargestellten bevorzugten Ausführungsbeispiels weiter erläutert. Die einzige Figur der Zeichnung zeigt die Elemente der Sensoranordnung in einer Explosionsdarstellung. Die gesamte Sensoranordnung ist als Schichtstapel ausgebildet, die sich aus dem Gassensorelement 11, dem darunter angeordneten Abstandselement 12, das auch als Kontaktelement bezeichnet wird, und dem unterhalb des Abstandselementes 12 angeordnetem Träger 13 mit ASIC gebildet. In der Explosionsdarstellung der Zeichnung sind diese Elemente auseinandergezogen dargestellt. Das Gassensorelement 11 weist Messelemente bzw. Gassensoren 21 auf. Weiterhin sind in dem Gassensorelement 11 Heizeinrichtungen 25 angeordnet. Diese erhitzen die Gassensoren auf Temperaturen von 200° C bis 450° C, die während der Messung notwendig sind. Das Gassensorelement 11 ist auf dem Abstandselement 12 angeordnet, das im wesentlichen einen Bodenbereich 26 und darauf angeordnete Stege 22 oder Säulen aufweist. Die Stege oder Säulen 22 sind im wesentlichen im Randbereich des Bodenbereichs 26 angeordnet. Die mit Mikrosystemtechnik hergestellten Stege sind so strukturiert, daß eine elektrische Kontaktierung zwischen dem Gassensorelement 11 und dem unter dem Ab-standselement 12 angeordneten Träger 13 erfolgen kann. Unter dem Abstandselement 12 ist also der Träger 13 mit dem darauf angeordneten ASIC 23 zur Signalaufbereitung angeordnet. Der ASIC 23 ist dabei in einem zentralen Innenbereich des Trägers 13 angeordnet und das Abstandselement 12 ist in seinen Abmessungen an die Abmessungen des ASIC 23 angepaßt. Das Gassensorelement 11 und das Abstandselement 12 sind in ihren Abmessungen übereinstimmend ausgebildet und aufeinander gestapelt.

## Patentansprüche

1. Sensoranordnung mit mindestens einem Gassensor (21), insbesondere zur Bestimmung der Luftgüte, und einer elektronischen Schaltung zum Betrieb der Sensoranordnung, wobei der Gassensor (21) in einem als Halbleiterbauelement ausgeführten Gassensorelement (11) realisiert ist, und wobei die elektronische Schaltung als ASIC (23) realisiert und auf einem als Halbleiterbauelement ausgeführten Träger (13) angeordnet ist,
**dadurch gekennzeichnet,**
**dass** das Gassensorelement (11) eine Heizeinrichtung (25) zum Heizen des Gassensors (21) aufweist, und
**dass** zwischen dem Träger (13) mit ASIC (23) und dem Gassensorelement (11) ein als Halbleiterbauelement ausgebildetes Abstandselement (12) angeordnet ist, wobei das Abstandselement (12) mindestens einen Luftspalt aufweist.

2. Sensoranordnung nach Anspruch 1, **dadurch gekennzeichnet, dass** das Abstandselement (12) säulenartige Stege (22) aufweist.

3. Sensoranordnung nach Anspruch 1 oder 2, **dadurch gekennzeichnet, dass** das Abstandselement (12) aus einem Bodenbereich (26) und darauf angeordneten Stegen (22) besteht.

4. Sensoranordnung nach einem der Ansprüche 2 oder 3, **dadurch gekennzeichnet, dass** die säulenartigen Stege (22) im Randbereich des Abstandselementes (12) angeordnet sind.

5. Sensoranordnung nach einem der Ansprüche 2 bis 4, **dadurch gekennzeichnet, dass** die Stege (22) zur elektrischen Kontaktierung zwischen dem Gassensorelement (11) und der elektronischen Schaltung dienen.

6. Sensoranordnung nach einem der vorhergehenden Ansprüche, **dadurch gekennzeichnet, dass** das Gassensorelement (11), das Abstandselement (12) und der ASIC (23) einen Schichtstapel ausbilden.

7. Sensoranordnung nach einem der vorhergehenden Ansprüche, **dadurch gekennzeichnet, dass** Außenwände der Sensoranordnung von Außenseiten der Halbleiterbauelemente (11, 12, 13) ausgebildet sind.

## Claims

1. A sensor arrangement with at least one gas sensor (21), in particular for purposes of determining air quality, and an electronic circuit for purposes of operating the sensor arrangement, wherein
the gas sensor (21) is implemented in a gas sensor element (11) embodied as a semiconductor component, and wherein
the electronic circuit is implemented as an ASIC (23), and is arranged on a carrier (13) embodied as a semiconductor component,
**characterised in that**,
the gas sensor element (11) has a heating device (25) for purposes of heating the gas sensor (21), and **in that**
a spacer element (12), designed as a semiconductor component, is arranged between the carrier (13) with ASIC (23), and the gas sensor element (11), wherein the spacer element (12) has at least one air gap.

2. The sensor arrangement in accordance with claim 1, **characterised in that**, the spacer element (12) has webs (22) in the form of columns.

3. The sensor arrangement in accordance with claim 1 or 2, **characterised in that**, the spacer element (12) consists of a base region (26) and webs (22) that are arranged on the former.

4. The sensor arrangement in accordance with one of the claims 2 to 3, **characterised in that**, the webs (22) in the form of columns are arranged in the edge region of the spacer element (12).

5. The sensor arrangement in accordance with one of the claims 2 to 4, **characterised in that**, the webs (22) serve to provide electrical contact between the gas sensor element (11) and the electronic circuit.

6. The sensor arrangement in accordance with one of the preceding claims, **characterised in that**, the gas sensor element (11), the spacer element (12), and the ASIC (23) form a layered stack.

7. The sensor arrangement in accordance with one of the preceding claims, **characterised in that**, outer walls of the sensor arrangement are formed from outer sides of the semiconductor components (11, 12, 13).

## Revendications

1. Dispositif de détection comprenant au moins un capteur de gaz (21), en particulier pour déterminer la qualité de l'air, et un circuit électronique pour faire fonctionner le dispositif de détection, sachant que le capteur de gaz (21) est réalisé en un élément de capteur de gaz (11) formé en tant qu'élément de construction semi-conducteur, et sachant que le circuit électronique est formé en tant qu'ASIC (23) et est disposé sur un support (13) réalisé en tant qu'élément de construction semi-conducteur,
**caractérisé en ce que**
l'élément de capteur de gaz (11) présente un dispositif de chauffage (25) pour chauffer le capteur de gaz (21), et
**en ce qu'**un élément d'espacement (12) formé en tant qu'élément de construction semi-conducteur est disposé entre le support (13) avec ASIC (23) et l'élément de capteur de gaz (11), sachant que l'élément d'espacement (12) comprend au moins un entrefer.

2. Dispositif de détection selon la revendication 1, **caractérisé en ce que** l'élément d'espacement (12) présente des branches (22) de type colonne.

3. Dispositif de détection selon la revendication 1 ou 2, **caractérisé en ce que** l'élément d'espacement (12) est composé d'une partie de fond (26) et de branches (22) disposées dessus.

4. Dispositif de détection selon l'une des revendications 2 ou 3, **caractérisé en ce que** les branches (22) de type colonne sont disposées dans la zone de bordure de l'élément d'espacement (12).

5. Dispositif de détection selon l'une des revendications 2 à 4, **caractérisé en ce que** les branches (22) servent au contact électrique entre l'élément de capteur de gaz (11) et le circuit électronique.

6. Dispositif de détection selon l'une des revendications précédentes, **caractérisé en ce que** l'élément de capteur de gaz (11), l'élément d'espacement (12) et l'ASIC (23) forment un empilage de couches.

7. Dispositif de détection selon l'une des revendications précédentes, **caractérisé en ce que** des parois extérieures du dispositif de détection sont formées par des côtés extérieurs des éléments de construction semi-conducteurs (11, 12, 13).
